# EUROPÄISCHE PATENTSCHRIFT

(11) **EP 2 821 453 B1**
(45) Veröffentlichungstag und Bekanntmachung des Hinweises auf die Patenterteilung: **27.04.2016**
(21) Anmeldenummer: 13175269.3
(22) Anmeldetag: 05.07.2013
(51) Int. Cl.: C09J 7/04, B60R 16/02

(54) **Klebeband**
Adhesive tape
Bande collante

(43) Veröffentlichungstag der Anmeldung: 07.01.2015
(73) Patentinhaber: Coroplast Fritz Müller GmbH & Co. KG, 42279 Wuppertal (DE)
(72) Erfinder: Lodde, Christoph, 59439 Holzwickede (DE); Wittig, Gülay, 44799 Bochum (DE)
(74) Vertreter: Patentanwälte Dr. Solf & Zapf

(56) Entgegenhaltungen:
- EP-A1- 2 050 802
- EP-A2- 2 050 803
- DE-A1-102007 039 263
- DE-U1-202007 008 003

## Beschreibung

Die vorliegende Erfindung betrifft ein Klebeband, insbesondere ein Kabelwickelband, umfassend einen bandförmigen Träger aus einem textilen Gewebe aus Kettfäden und Schussfäden, wobei die Kettfäden aus einem PET-Kunststoffmaterial hergestellt und als Filamentgarn ausgebildet sind, sowie eine auf dem Träger aufgebrachte Klebebeschichtung.

Ein derartiges Klebeband ist beispielsweise aus der EP 199 03 93 A1 bekannt. Hierbei ist ein auf die Breite bezogener Titer der Kettfäden kleiner als ein auf die Länge bezogener Titer der Schussfäden.

Weiterhin sind Kabelwickelbänder bekannt, wobei das Gewebe aus aus Zellwolle bestehenden Fäden gebildet wird. Derartige Klebebänder besitzen eine beschränkte Temperaturbeständigkeit, unterliegen einem starken Schrumpf, sind verrottbar und neigen zu einer starken Feuchtigkeitsaufnahme. Zudem sind auf Grund des verwendeten Materials die Herstellungskosten relativ hoch.

Klebebänder, die aus Kett- und Schussfäden bestehen, die ausschließlich aus PET-Kunststoffmaterial bestehen, besitzen eine unerwünschte Steifigkeit und sind je nach Konstruktion nicht quer einreißbar.

Weiterhin ist aus der EP 107 45 95 A1 ein Klebeband bekannt, bei dem der aus einem Gewebe gebildete Träger, wobei die Kett- und Schussfäden aus einem PET-Kunststoff bestehen, derart aufgebaut ist, dass dünne Kettfäden und dicke Schussfäden verwendet werden. Hierbei besitzen die Kettfäden einen auf die auf die Breite bezogenen Titer von maximal 2.500 dtex pro cm, und die Schussfäden besitzen einen auf die Breite bezogenen Titer von 3.000 bis 4.500 dtex pro cm. Die Dicke der Kettfäden beträgt insbesondere 40 bis 60 dtex und die Dicke der Schussfäden 150 bis 250 dtex.

In der EP 2 050 803 A2 wird ein flexibles Kabelwickelband mit angenehmer Haptik und guten Dämpfeigenschaften offenbart. Der bandförmige Träger besteht aus einem Schusseintragsgewirke aus texturiertem Filamentgarn.

Die DE 20 2007 008 003 U1 beschreibt ein schmiegsames Kabelwickelband umfassend einen Gewebeträger mit geringer Biegesteifigkeit. Diese wird durch eine Anzahl von Kettfäden im Bereich von 20 bis 42 je cm und eine Anzahl von Schussfäden im Bereich von 10 bis 22 je cm erreicht.

Der vorliegenden Erfindung liegt die Aufgabe zu Grunde, ein Klebeband zu schaffen, das hinsichtlich seiner Haptik einem Klebeband mit einem Zellwolle-Träger, insbesondere hinsichtlich der Weichheit und der Schmiegsamkeit entspricht und auch eine Quereinreißbarkeit von Hand besitzt. Gleichzeitig soll es aber in Bezug auf die Temperaturstabilität, die Flexibilität und die übrigen Eigenschaften demjenigen Klebeband angepasst sein, das einen Kunststoff-Gewebeträger, z. B. PET-Gewebeträger besitzt.

Erfindungsgemäß wird dies dadurch erreicht, dass ausgehend von dem eingangs beschriebenen Klebeband die Schussfäden des textilen Gewebes, das den bandförmigen Träger bildet, jeweils aus einem Stapelfasergarn aus Kunststoffmaterial gebildet sind. Bei dem Kunststoffmaterial für die Schuss- und Kettfäden kann es sich um Polyester, insbesondere PET (Polyethylenterephthalat), Polyamid und/oder Polypropylen handeln.

Somit wird erfindungsgemäß ein Gewebe mit gemischten Garnen, und zwar Filamentgarn für die Kettfäden und Stapelfasergarn für die Schussfäden verwendet.

Stapelfasergarne zeichnen sich dadurch aus, dass die einzelnen Fasern eine endliche Länge besitzen. Durch Verdrehen der Fasern beim Spinnen entsteht ein Garn beliebiger Länge. Je nach eingesetzter Faserlänge der einzelnen Fasern unterscheidet man zwischen Kurz- und Langstapelfasergarn. Die Länge derartiger Fasern, die in einem Stapelfasergarn Verwendung finden, ist üblicherweise von 20 bis 150 mm.

Unter einem Filamentgarn wird ein Garn verstanden, das theoretisch aus unendlich langen Fasern, den sogenannten Filamenten, besteht. Filamentgarne sind in der Regel nicht verdreht, da sie auch ohne eine Verdrehung der Fasern zueinander zusammenhalten. Monofilamentgarne bestehen nur aus einem einzigen Filament, und Multifilamentgarne bestehen aus mindestens zwei Einzelfasern, wobei man von Minifilamentgarnen spricht, wenn insbesondere zwei bis fünf Einzelfasern vorhanden sind, und von Multifilamentgarnen wird gesprochen, wenn diese aus mehr als fünf Einzelfasern bestehen.

Erfindungsgemäß können die Schussfäden jeweils unterschiedliche Schussfadenstärken besitzen, wobei vorteilhafterweise bei ein und demselben Träger stets dieselben Schussfadenstärken Verwendung finden. Hierbei betragen die Schussfädenstärken 30 dtex bis 200 dtex, wobei die Stapelfaserlängen größer/gleich 20 mm und kleiner/gleich 150 mm sein können, und vorzugsweise 20 mm bis 50 mm betragen können. Hierbei liegt bei dem jeweiligen Stapelfasergarn eine insbesondere konstante Faserlänge vor.

Das erfindungsgemäße Band zeichnet sich auf Grund des verwendeten Trägermaterials durch eine Weichheit und Schmiegsamkeit aus, wie diese beispielsweise bei einem Zellwoll-Gewebeband vorhanden sind. Darüber hinaus wird durch die Wahl der Fadenstärken von Kett- und Schussfäden eine Quereinreißbarkeit von Hand bewirkt. Das erfindungsgemäß verwendete Kunststoffmaterial garantiert eine Temperaturstabilität von 85 ° C bis 150 ° C. Zudem ist das erfindungsgemäße Klebeband flexibel, verrottungsfest und weist einen geringen Schrumpf auf.

Vorteilhafte Ausführungen der Erfindung sind in den Unteransprüchen enthalten und werden an Hand der in den beiliegenden Zeichnungen dargestellten Ausführungsbeispiele näher erläutert. Es zeigen:
- Fig. 1: eine Aufsicht auf eine Oberseite eines erfindungsgemäßen Klebebandes,
- Fig. 2: einen Schnitt durch ein erfindungsgemäßes Klebeband gemäß Fig. 1, und zwar in Richtung der Längsfäden entlang der Schnittlinie II-II in Fig. 1 und
- Fig. 3: einen Schnitt durch eine weitere Ausführung eines erfindungsgemäßen Klebebandes.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

Ein erfindungsgemäßes Klebeband besteht aus einem bandförmigen Träger 1 aus einem textilen Gewebe aus Kettfäden 2 und Schussfäden 3. Als Material für die Kettfäden 2 und Schussfäden 3 wird vorzugsweise ein PET-Kunststoffmaterial, insbesondere Polyester verwendet. Die Kettfäden 2 werden aus einem Filamentgarn gebildet, das als Monofilamentgarn oder als Multifilamentgarn gebildet ist, d. h. bei Verwendung eines Multifilamentgarns bestehen die Kettfäden 2 aus mehreren, unverdrehten Endlosfasern, d. h. Endlosfilamenten.

Erfindungsgemäß sind die Schussfäden 3 als Stapelfasergarne ausgebildet, wobei es sich um aus Endlosfilamenten geschnittene Stapelfasern handelt, deren Stapelfaserlänge gleich groß ist, typischerweise beträgt die Stapelfaserlänge 20 mm bis 150 mm, vorzugsweise 20 mm bis 50 mm. Vorteilhafterweise ist das Flächengewicht des Gewebeträgers größer/gleich 50 g/qm und kleiner/gleich 250 g/qm. Insbesondere ist es zweckmäßig, wenn das Flächengewicht des Trägers 1 70 bis 120 g/qm beträgt.

Die Fadenstärke der Kettfäden 2 beträgt 20 dtex bis 90 dtex, insbesondere 50 dtex bis 76 dtex, und die Kettfadenanzahl der Kettfäden 2 pro cm Trägerbreite beträgt 30 bis 70 Fäden, vorzugsweise 40 bis 50 Fäden. Weiterhin beträgt die Fadenstärke der Schussfäden 3 100 dtex bis 300 dtex, vorzugsweise 160 dtex bis 220 dtex. Die Anzahl der Schussfäden 3 pro cm Trägerlänge beträgt 20 bis 60 Fäden, insbesondere 25 bis 35 Fäden. Ein erfindungsgemäß verwendeter Träger 1 besitzt insbesondere ein Flächengewicht von 70 g/qm bis 120 g/qm. Die Dicke eines erfindungsgemäßen Trägers 1 liegt vorzugsweise in einem Bereich von 0,12 bis 0,24 mm, und die Dicke des fertigen Klebebandes beträgt vorzugsweise 0,14 mm bis 0,30 mm. Die Dicke ist dabei über die Fläche des Trägers 1 gleich groß, d. h. konstant. Die erfindungsgemäß auf mindestens einer Seite des Trägers 1 aufgebrachte Klebebeschichtung 4 besteht vorzugsweise aus einem Acrylatklebstoff oder aus einem Synthesekautschuk. Weiterhin kann es erfindungsgemäß zweckmäßig sein, wenn die Kettfäden 2 untereinander intermingelt und/oder texturiert und/oder glatt sind. Weiterhin kann es von Vorteil sein, wenn die Kettfäden 2 und die Schussfäden 3 spinndüsengefärbt und/oder stückgefärbt sind. Hierbei wird unter Spinndüsenfärben eine Einfärbung des Fadenmaterials während des Extrusionsprozesses der die Fäden bildenden Fasern verstanden. Stückfärben ist eine nachträgliche Färbung der extrudierten Fasern. In der nachfolgenden Tabelle 1 ist eine Übersicht der mechanischen Eigenschaften des bei einem erfindungsgemäßen Klebeband verwendeten Gewebeträgers im Vergleich mit einem Gewebeträger aus Zellwolle gezeigt. Hieraus ergibt sich, dass die erfindungsgemäßen Gewebe bei einer geringeren Dicke eine verbesserte Reißdehnung und eine gleichwertige Bruchkraft besitzen. Zudem ist die Luftdurchlässigkeit wesentlich reduziert. Dadurch, dass die Luftdurchlässigkeit deutlich reduziert wird, lassen sich die Materialien einfacher mit weniger Kleberauftrag beschichten. Die erfindungsgemäßen Gewebeträger (Konstruktion 1 und 2) zeichnen sich durch eine Weiterreißfestigkeit gemäß Elmendorf-Test von 5.000 bis 8.000 mN aus. Des Weiteren bedingen die Stapelfaserfilamentgarne eine dem Zellwollgewebe entsprechende Haptik, siehe hierzu Tabelle 1. Dieses lässt sich unter anderem auch durch die Biegesteifigkeit nachweisen. Die erfindungsgemäßen Gewebeträger haben eine Biegesteifigkeit von 1 bis 2 mNcm².

**Tabelle 1:**

| Alle Angaben beziehen sich auf das Trägermaterial ohne Beschichtung. | | | | |
|---|---|---|---|---|
| Prüfung | Einheit/Prüfart | Stapel/Filament PET-Gewebe Konstruktion 1 | Stapel/Filament PET-Gewebe Konstruktion 2 | ZW-Gewebe |
| Trägermaterial | --- | Polyester | Polyester | Viskose |
| Flächengewicht | g/m² | 90 - 100 | 105-110 | 105 - 110 |
| Kettfadenanzahl | Fd/cm | 45 | 45 | 26,5 |
| Fadenstärke der Kettfäden | dtex | 56 | 56 | 200 |
| Schussfadenanzahl | Fd/cm | 34 | 30 | 26.5 |
| Fadenstärke der Schussfäden | dtex | 200 | 281 | 200 |
| Stapelfaserlänge | mm | 32 | 21 | 18 |
| Dicke | mm | 0,12 | 0,14 | 0,18 - 0,19 |
| Reißdehnung | % | 24 - 27 | 25 - 28 | 8 - 15 |
| Bruchkraft | N/cm | 78 - 85 | 82 - 84 | 80 - 90 |
| Flächengewicht | g/m² | 92 - 94 | 108 - 110 | 105 - 110 |
| Luftdurchlässigkeit | l/m²s | 60 - 89 | 80 - 100 | 350 - 550 |
| Weiterreißfestigkeit | mN | 5.000 - 7.000 | 6.000 - 8.000 | 8.500-12.000 |
| Biegesteifigkeit | mN cm² | 1 - 2 | 1 - 2 | 1 - 2 |
| Haptik | sensorische Prüfung | weich wie Zellwollgewebe | weich wie Zellwollgewebe | weich |
| Handeinreißbarkeit | LV 312 | quereinreißbar | quereinreißbar | quereinreißbar |

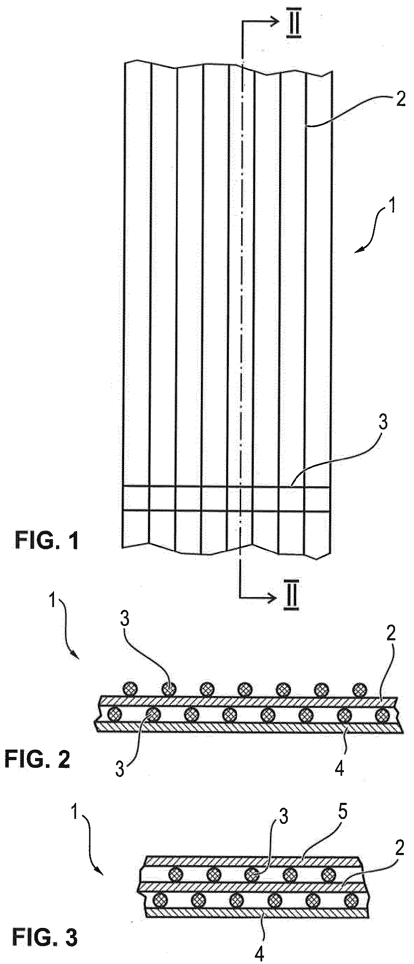

In der Tabelle 2 sind technische Daten eines erfindungsgemäßen Klebebandes gemäß Fig. 1 wiedergegeben.

**Tabelle 2:**

| Die Tabelle betrifft den Träger mit einseitiger Klebebeschichtung. | | |
|---|---|---|
| Prüfung | Einheit | Ergebnisse Konstruktionen 1 und 2 |
| Dicke | mm | 0,14 - 0,30 |
| Reißdehnung | % | 33 - 39 |
| Reißfestigkeit | N/cm | 78 - 82 |
| Klebkraft Stahl | N/cm | 5,0 - 7,5 |
| Klebkraft Bandrücken | N/cm | 4,0 - 6,0 |
| Unwind | N | 2 - 9 |
| Flagging (30 min.) | mm | 0 - 10 |
| Flagging (24 Std.) | mm | 0 - 10 |
| Abrieb mit 5 mm Dorn | Hübe | 80 - 95 (Klasse A) |
| Handeinreißbarkeit | - | quereinreißbar |

Die in den beiden Tabellen 1 und 2 enthaltenen Basisdaten wurden nach den Normen der nachfolgenden Tabelle 3 bestimmt:

**Tabelle 3:**

| DIN Normen | Neue Bezeichnung | Datum der aktuell gültigen Version | |
|---|---|---|---|
| EN ISO 2286-2 | | 1998-07 | Flächengewicht |
| DIN 53830-3 | | 1981-05 | Bestimmung der Feinheit von Garnen |
| DIN EN 1049-2 | | 1994-02 | Bestimmung der Anzahl der Fäden je Längeneinheit |
| DIN EN 1942 | | 2008-06 | Dicke |
| DIN EN 14410 | | 2003-06 | Bruchkraft / Dehnung |
| DIN EN 1939 | | 2003-12 | Klebkraft |
| DIN EN 1944 | | 1996-04 | Abrollkraft |
| DIN EN 21974 | DIN EN ISO 1974:2012-09 | 2012-09 | Weiterreißfestigkeit |
| DIN EN ISO 9237 | | 1995-12 | Luftdurchlässigkeit |
| DIN 53 362 | | 2003-10 | Biegesteifigkeit |
| flagging | | | nach LV 312 |
| LV 312 | LV 312-1 | 2009 Okt. 2010 | Schutzsysteme für Leitungssätze in Kraftfahrzeugen Klebebänder; Prüfrichtlinie |
| LV 312 | LV 312 | 2009 Okt. 2010 | Handeinreißbarkeit |

Die in Tabelle 2 angegebenen Parameter dokumentieren dabei die vorteilhaft erfindungsgemäß erreichbaren Eigenschaften. Der Abriebtest erfolgte dabei mit einem Abriebtester nach der gemeinsamen Prüfrichtlinie der Firma AUDI, BMW, Daimler und VW "Klebebänder für Kabelsätze in Kraftfahrzeugen" LV 312 an einem 5-mm-Dorn. Nach jeweils zehn Hüben erfolgte eine Kontrolle. Der Endwert war erreicht, sobald die Rückseitenbeschichtung, d. h. die Klebeschicht 4 vom Gewebe des Trägers 1 abgerieben wurde.

Das erfindungsgemäße Klebeband eignet sich einerseits als Kabelwickelband zum Umwickeln von einzelnen elektrischen Kabeln und Kabelsträngen. Es ist aber ebenso in der Medizin als medizinisches Klebeband oder als Reparatur-Klebeband im Do-it-yourself Bereich verwendbar. Weiterhin ist es erfindungsgemäß von Vorteil, das Klebeband auf seiner der Klebebeschichtung gegenüberliegenden Seite mit einer Oberflächenbeschichtung 5 aus Kunststoff, z. B. Acrylat, Polurethan, PVC oder Silikon zu versehen, siehe Fig. 3. Die Klebebeschichtung 4 und/oder die Oberflächenbeschichtung 5 kann auch in die Gewebestruktur des Trägers 1 eindringen.

### Bezugszeichen

- 1: Träger
- 2: Kettfäden
- 3: Schussfäden
- 4: Klebebeschichtung
- 5: Oberflächenbeschichtung

## Patentansprüche

1. Klebeband, insbesondere Kabelwickelband, umfassend einen bandförmigen Träger (1) aus einem textilen Gewebe aus Kettfäden (2) und Schussfäden (3), wobei die Kettfäden (2) als Filamentgarn (2) und die Schussfäden (3) als Stapelfasergarn ausgebildet sind und aus Polyester, Polyamid und/oder Polypropylen gebildet sind, und eine auf den Träger (1) aufgebrachte Klebebeschichtung (4), wobei die Faserlänge der Stapelfasern des Stapelfasergarns 20 mm bis 150 mm und die Fadenstärke der Kettfäden (2) des Trägers (1) 20 dtex bis 90 dtex betragen, und die Fadenstärke der Schussfäden (3) 100 dtex bis 300 dtex beträgt.

2. Klebeband nach Anspruch 1,
**dadurch gekennzeichnet**, die Faserlänge der Stapelfasern des Stapelfasergarns 20 mm bis 50 mm beträgt.

3. Klebeband nach Anspruch 1 oder 2,
**dadurch gekennzeichnet, dass** das Flächengewicht des Trägers (1) größer/gleich 50 g/qm und kleiner/gleich 250 g/qm ist, vorzugsweise 70 g/qm bis 120 g/qm.

4. Klebeband nach einem der Ansprüche 1 bis 3,
**dadurch gekennzeichnet, dass** die Fadenstärke der Kettfäden (2) des Trägers (1) 50 dtex bis 76 dtex beträgt.

5. Klebeband nach einem der Ansprüche 1 bis 4,
**dadurch gekennzeichnet, dass** die Kettfadenanzahl, d. h. Anzahl der Kettfäden (2) pro cm Trägerbreite 30 bis 70 Fäden, vorzugsweise 40 bis 50 Fäden beträgt.

6. Klebeband nach einem der Ansprüche 1 bis 5,
**dadurch gekennzeichnet, dass** die Fadenstärke der Schussfäden (3) 160 dtex bis 285 dtex beträgt.

7. Klebeband nach einem der Ansprüche 1 bis 6,
**dadurch gekennzeichnet, dass** die Schussfadenanzahl, d. h. die Anzahl der Schussfäden (3) pro cm Trägerlänge 20 bis 60 Fäden, vorzugsweise 25 bis 35 Fäden beträgt.

8. Klebeband nach einem der Ansprüche 1 bis 7,
**dadurch gekennzeichnet, dass** die Dicke des Trägers (1) größer/gleich 0,12 und kleiner/gleich 0,24 mm ist und insbesondere die Dicke des Klebebandes größer/gleich 0,14 und kleiner/gleich 0,30 mm ist.

9. Klebeband nach einem der Ansprüche 1 bis 8,
**dadurch gekennzeichnet, dass** die Kettfäden (2) intermingelt und/oder texturiert und/oder glatt sind.

10. Klebeband nach einem der Ansprüche 1 bis 9,
**dadurch gekennzeichnet, dass** die Kettfäden (2) und die Schussfäden (3) spinndüsengefärbt und/oder stückgefärbt sind.

11. Klebeband nach einem der Ansprüche 1 bis 10,
**dadurch gekennzeichnet, dass** die Fadenstärke, die Anzahl der Kettfäden (2) und der Schussfäden (3) derart aufeinander abgestimmt sind, dass eine Biegesteifigkeit kleiner/gleich 5 mNcm² gemäß der Norm DIN 53 362 gegeben ist.

12. Klebeband nach einem der Ansprüche 1 bis 11,
**dadurch gekennzeichnet, dass** die Stapelfaserlänge der Schussfäden (3), die Anzahl der Kett- und Schussfäden (2, 3) und die Fadenstärke der Kett- und Schussfäden (3) derart gewählt sind, dass die Luftdurchlässigkeit des Trägers (1) kleiner/gleich 300 l/m² s gemäß der Norm DIN EN ISO 9237 beträgt.

13. Klebeband nach einem der Ansprüche 1 bis 12,
**dadurch gekennzeichnet, dass** auf dem Träger (1) auf seiner der Klebebeschichtung (4) gegenüberliegenden Seite eine Oberflächenbeschichtung (5) aus Kunststoff aufgebracht ist.

## Claims

1. Adhesive tape, specifically cable-wrapping tape, comprising a tape-shaped backing (1) comprising a textile fabric woven from warp threads (2) and weft threads (3), wherein the warp threads are formed as filament yarn (2) and the weft threads (3) are formed as staple fibre yarn, wherein the warp threads (2) and the weft threads (3) are formed of polyester, polyamide and/or polypropylene and an adhesive coating (4) applied to the backing (1), wherein the staple fibres of the staple fibre yarn are from 20 mm to 150 mm in fibre length and the linear density of the warp threads (2) of the backing (1) is 20 dtex to 90 dtex and the linear density of the weft threads (3) is 100 dtex to 300 dtex.

2. Adhesive tape according to Claim 1,
**characterized in that** the staple fibres of the staple fibre yarn are from 20 mm to 50 mm in fibre length.

3. Adhesive tape according to Claim 1 or 2,
**characterized in that** the basis weight of the backing (1) is not less than 50 g/m² and not more than 250 g/m², preferably in the range from 70 g/m² to 120 g/m².

4. Adhesive tape according to any of Claims 1 to 3,
**characterized in that** the linear density of the warp threads (2) of the backing (1) is 50 dtex to 76 dtex.

5. Adhesive tape according to any of Claims 1 to 4,
**characterized in that** the number of ends, i.e. the number of warp threads (2) per cm of backing width, is 30 to 70, preferably 40 to 50.

6. Adhesive tape according to any of Claims 1 to 5,
**characterized in that** the linear density of the weft threads (3) is 160 dtex to 285 dtex.

7. Adhesive tape according to any of Claims 1 to 6,
**characterized in that** the number of picks, i.e. the number of weft threads (3) per cm of backing length, is 20 to 60, preferably 25 to 35.

8. Adhesive tape according to any of Claims 1 to 7,
**characterized in that** the thickness of the backing (1) is not less than 0.12 and not more than 0.24 mm and specifically the thickness of the adhesive tape is not less than 0.14 and not more than 0.30 mm.

9. Adhesive tape according to any of Claims 1 to 8,
**characterized in that** the warp threads (2) are intermingled and/or textured and/or flat.

10. Adhesive tape according to any of Claims 1 to 9,
**characterized in that** the warp threads (2) and the weft threads (3) are solution dyed and/or piece dyed.

11. Adhesive tape according to any of Claims 1 to 10,
**characterized in that** the linear density and the number of warp threads (2) and of weft threads (3) are aligned with each other so as to provide a DIN 53 362 flexural stiffness of not more than 5 mNcm².

12. Adhesive tape according to any of Claims 1 to 11,
**characterized in that** the staple fibre length of the weft threads (3), the number of warp and weft threads (2, 3) and the linear density of the warp and weft threads (3) are chosen so that the DIN EN ISO 9237 air permeability of the backing (1) is not more than 300 l/m²s.

13. Adhesive tape according to any of Claims 1 to 12,
**characterized in that** a surface coating (5) of plastic is applied to the backing (1) on the side opposite to the adhesive coating (4).

## Revendications

1. Bande adhésive, en particulier bande d'enroulement pour câbles, comprenant un support en forme de bande (1) constitué par un tissu textile constitué de fils de chaîne (2) et de fils de trame (3), les fils de chaîne (2) étant formés sous forme de fils continus (2) et les fils de trame (3) étant formés sous forme de fils à fibres discontinues et formés en polyester, en polyamide et/ou en polypropylène, et par un revêtement adhésif (4) appliqué sur le support (1), la longueur des fibres discontinues du fil à fibres discontinues étant de 20 mm à 150 mm et l'épaisseur des fils de chaîne (2) du support (1) étant de 20 dtex à 90 dtex et l'épaisseur des fils de trame (3) étant de 100 dtex à 300 dtex.

2. Bande adhésive selon la revendication 1, **caractérisée en ce que** la longueur des fibres discontinues du fil à fibres discontinues est de 20 mm à 50 mm.

3. Bande adhésive selon la revendication 1 ou 2, **caractérisée en ce que** le poids surfacique du support (1) est supérieur/égal à 50 g/m² et inférieur/égal à 250 g/m², de préférence de 70 g/m² à 120 g/m².

4. Bande adhésive selon l'une quelconque des revendications 1 à 3, **caractérisée en ce que** l'épaisseur des fils de chaîne (2) du support (1) est de 50 dtex à 76 dtex.

5. Bande adhésive selon l'une quelconque des revendications 1 à 4, **caractérisée en ce que** le nombre de fils de chaîne, c'est-à-dire le nombre de fils de chaîne (2) par cm de largeur de support, est de 30 à 70 fils, de préférence de 40 à 50 fils.

6. Bande adhésive selon l'une quelconque des revendications 1 à 5, **caractérisée en ce que** l'épaisseur des fils de trame (3) est de 160 dtex à 285 dtex.

7. Bande adhésive selon l'une quelconque des revendications 1 à 6, **caractérisée en ce que** le nombre de fils de trame, c'est-à-dire le nombre de fils de trame (3) par cm de longueur de support, est de 20 à 60 fils, de préférence de 25 à 35 fils.

8. Bande adhésive selon l'une quelconque des revendications 1 à 7, **caractérisée en ce que** l'épaisseur du support (1) est supérieure/égale à 0,12 et inférieure/égale à 0,24 mm et en particulier l'épaisseur de la bande adhésive est supérieure/égale à 0,14 et inférieure/égale à 0,30 mm.

9. Bande adhésive selon l'une quelconque des revendications 1 à 8, **caractérisée en ce que** les fils de chaîne (2) sont entremêlés et/ou texturés et/ou lisses.

10. Bande adhésive selon l'une quelconque des revendications 1 à 9, **caractérisée en ce que** les fils de chaîne (2) et les fils de trame (3) sont teintés dans la masse et/ou teintés en pièce.

11. Bande adhésive selon l'une quelconque des revendications 1 à 10, **caractérisée en ce que** l'épaisseur des fils, le nombre de fils de chaîne (2) et le nombre de fils de trame (3) sont adaptés les uns aux autres de manière à obtenir une résistance à la flexion inférieure/égale à 5 mNcm² selon la norme DIN 53 362.

12. Bande adhésive selon l'une quelconque des revendications 1 à 11, **caractérisée en ce que** la longueur des fibres discontinues des fils de trame (3), le nombre de fils de chaîne et de fils de trame (2, 3) et l'épaisseur des fils de chaîne et des fils de trame (3) sont choisis de manière telle que la perméabilité à l'air du support (1) est inférieure/égale à 300 l/m² s selon la norme DIN EN ISO 9237.

13. Bande adhésive selon l'une quelconque des revendications 1 à 12, **caractérisée en ce qu'**un revêtement de surface (5) en matériau synthétique est appliqué sur la face opposée au revêtement adhésif (4) du support (1).
